# EUROPÄISCHE PATENTSCHRIFT

(11) **EP 2 746 001 B1**
(45) Veröffentlichungstag und Bekanntmachung des Hinweises auf die Patenterteilung: **08.02.2023**
(21) Anmeldenummer: 13005862.1
(22) Anmeldetag: 17.12.2013
(51) Int. Cl.: B25J 15/00, B23Q 3/155, B25J 15/02

(54) **GREIFVORRICHTUNG MIT GEHÄUSEGEFÜHRTEM SCHLITTEN**
GRIPPING DEVICE WITH HOUSING-GUIDED SLIDE
DISPOSITIF DE PRÉHENSION DOTÉ D'UN CHARIOT GUIDÉ DANS UN BOÎTIER

(30) Priorität: 18.12.2012 DE 102012024675
(43) Veröffentlichungstag der Anmeldung: 25.06.2014
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- US-A- 4 566 727
- US-A- 4 660 877
- US-A- 4 667 998
- US-A1- 2003 030 294

## Beschreibung

Die Erfindung betrifft eine Greifvorrichtung mit mindestens zwei in einem Gehäuse schwenkbar gelagerten - jeweils aus einem Greifelementeträger und/oder mindestens einem Greifelement bestehende - Greifer, wobei jeder Greifer im Gehäuse schwenkbar gelagert ist, wobei das gehäuseseitige Ende des jeweiligen Greifers eine Führungskulisse aufweist, wobei-jede Führungskulisse je einen Zapfen oder einen Bereich eines Zapfens zumindest bereichsweise umfasst und wobei der oder die Zapfen in einem im Gehäuse - quer zu den Schwenkachsen der Greifer - geführten Schlitten gelagert sind, der mit einem Stellglied in Wirkverbindung steht.

Aus der DE 10 2007 050 353 A1 ist eine derartige Greifvorrichtung bekannt. Bei dieser Vorrichtung weist der Schlitten einen von den Führungskulissen zweier Greifer umgriffenen Querbolzen auf, der in, im Vorrichtungsgehäuse angeordneten, Längsnuten geführt ist.

Die US-A-4 660 877 und US-A-4 566 727 beschreiben jeweils eine pneumatisch angetriebene Greifvorrichtung mit zwei schwenkbaren Greifelementen. Die Greifelemente werden jeweils von einem mit einer Gabelnut ausgestatteten, pneumatisch angetriebenen Schlitten angelenkt, der eine zylindrische Außenwandung aufweist, mit der er in einer Führungsbohrung des Gehäuses geführt ist. Quer zur Gabelnut ist im Einzelnen ein Bolzen angeordnet, an dem die Greifelemente mittels sichelförmiger Aussparungen bereichsweise ohne gegenseitige Überlappung mit großem Spiel anliegen.

Aus der US-A-4 667 998 ist eine elektromagnetisch angetriebene Greifvorrichtung bekannt, deren Hubmagnet ein gabelförmiges Ende aufweist, in dem ein Bolzen sitzt. Der Bolzen greift in die eine Führungskulisse bildende U-förmige Aussparung der Greifelemente ein, um diese anzulenken.

Der vorliegenden Erfindung liegt die Problemstellung zugrunde, eine Greifvorrichtung zu entwickeln, die bei großen Klemmkräften einen einfachen und bauraumsparenden Aufbau hat und zudem dauerhaft nahezu wartungsfrei ist.

Diese Problemstellung wird mit den Merkmalen des Patentanspruchs 1 gelöst. Dazu weist der Schlitten zumindest bereichsweise eine zylindrische Außenwandung auf, mit der er in einer Führungsbohrung des Gehäuses geführt ist. Die Führungsbohrung (16) hat einen Durchmesser, der mindestens 60% der Breite des Gehäuses (10) beträgt. Der Schlitten umgreift die gehäuseseitigen Enden des jeweiligen Greifers. Das Stellglied ist eine Zylinder-Kolben-Einheit, deren Kolben oder deren Zylinder mit dem Schlitten fest verbunden ist. Der Kolben der Zylinder-Kolben-Einheit weist einen unrunden Querschnitt auf.

Bei dieser Erfindung wird der Schlitten mit dem die Greifer bewegende Zapfen in einer Führungsbohrung des Grundkörpers großflächig geführt und abgestützt. Dazu hat der Schlitten einen Durchmesser, der bei der größeren Winkelgreifvorrichtung der Ausführungsbeispiele 67% und bei der kleineren Greifvorrichtung sogar 73% der Grundkörperbreite beträgt. Die an der Führung beteiligten Bauteile, also der Grundkörper und der Schlitten, gleiten aneinander bei minimaler Flächenpressung.

Auch umgreift der Schlitten gabelartig die beiden Greifelementeträger, die an den seitlichen Innenwänden der schlittenseitigen Gabelnut mit geringem Spiel anliegen. Da zudem die die Greifelementeträger lagernde und führende Lagernut des Grundkörpers eng toleriert ist, d.h. auch hier werden die Greifelementeträger seitlich mit wenig Spiel umgriffen, wird ein möglicherweise bei großen Greifkräften am Schlitten um die Schlittenmittellinie entstehendes Drehmoment, an den inneren Wandungen der Gabelnut mehr als ausreichend abgestützt.

Das jeweilige Stellglied ist in den Ausführungsbeispielen nur beispielhaft eine einfachwirkende mit Druckluft betriebene Zylinder-Kolben-Einheit, deren Rückstellfedern die Greifer in eine Geschlossenstellung bewegen. Das Stellglied kann ferner eine doppeltwirkende Zylinder-Kolben-Einheit sein, die ggf. alternativ mit Hydrauliköl angetrieben wird. Als Stellglieder können auch elektrische oder elektromechanische Aktoren benutzt werden. Zu den elektrischen Aktoren gehören hierbei u.a. konventionelle Linearmotoren, Hubmagnete und Tauchspulantriebe.

Selbstverständlich kann die Greifvorrichtung auch mehr als zwei Greifer aufweisen. Beispielsweise bei drei Greifern bilden die Mittellinien der Zapfen ein gleichschenkeliges Dreieck, wobei jedem Greifer ein Zapfen zugeordnet ist. Alle Greifer bewegen sich bei der Greifbewegung auf die Vorrichtungsmittellinie zu.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines kleinen Winkelgreifers;
- Figur 2:: Perspektivische Ansicht eines großen Winkelgreifers, verkleinert dargestellt;
- Figur 3:: Längsschnitt zu Figur 1, Schließstellung;
- Figur 4:: Querschnitt zu Figur 1, Schließstellung;
- Figur 5:: Gehäuse zu Winkelgreifer nach Figur 1;
- Figur 6:: Schlitten mit angebautem Kolben zu Winkelgreifer nach Figur 1;
- Figur 7:: Längsschnitt zu Figur 2, Schließstellung;
- Figur 8:: Querschnitt zu Figur 2, Schließstellung;
- Figur 9:: wie Figur 7, jedoch in Offenstellung;
- Figur 10:: wie Figur 3, jedoch in Offenstellung;
- Figur 11:: Greifelementeträger mit schmalem Dichtspalt gegenüber dem Gehäuse, in Schließstellung;
- Figur 12:: wie Figur 11, jedoch in Offenstellung;
- Figur 13:: Draufsicht zum Greifer nach Figur 10, jedoch mit unterschiedlichen Greifelementeträgern;
- Figur 14:: Schlitten mit angebautem Kolben zu Winkelgreifer nach Figur 2.

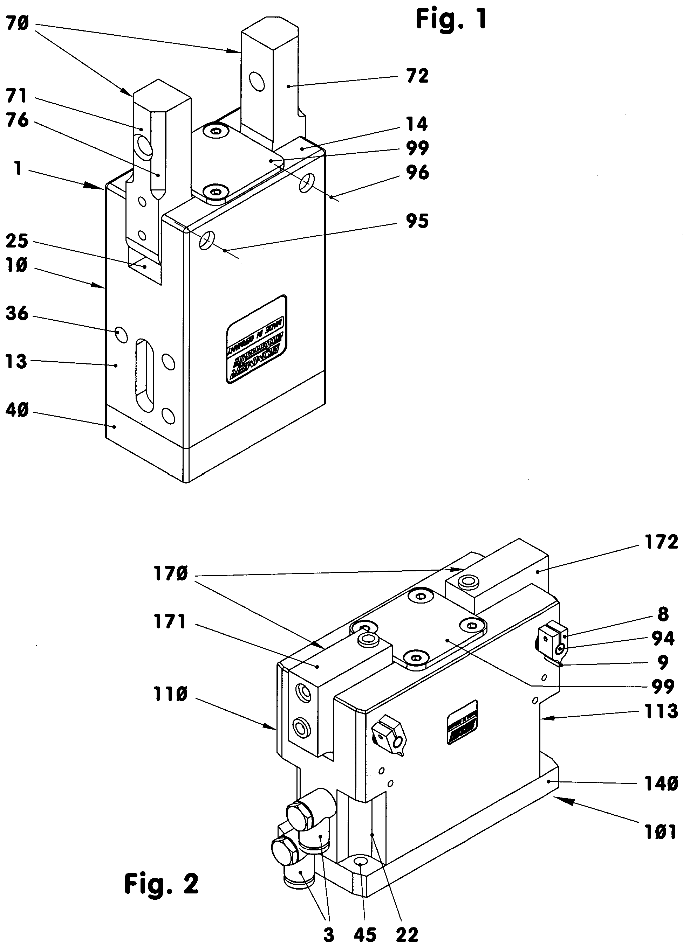

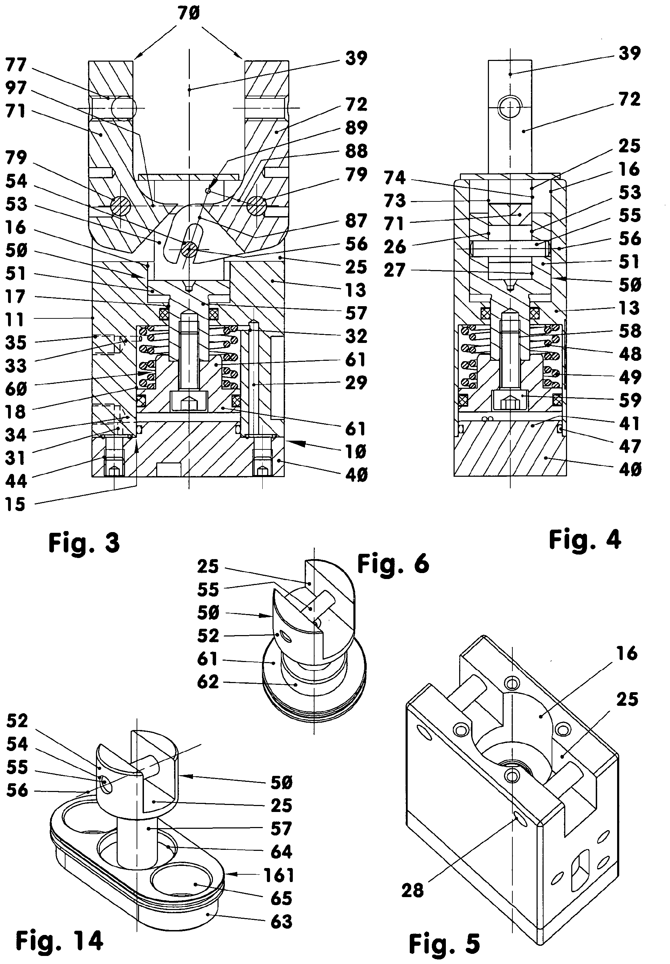

In den Figuren 1 und 2 wird jeweils eine Greifvorrichtung (1, 101) mit zwei Greifelementeträgern (71, 72; 171, 172) dargestellt. Die Greifelementeträger (71, 72; 171, 172) sind im jeweiligen Gehäuse (10, 110) schwenkbar gelagert angeordnet. Sie werden von einem im Gehäuse (10, 110) untergebrachten Stellglied (60), vgl. Figur 3, so angetrieben, dass sie um die Schwenkachsen (95, 96) verschwenkbar sind. In den Ausführungsbeispielen wird als Stellglied (60) eine Zylinder-Kolben-Einheit benutzt. Der Zylinder ist hierbei Teil des Gehäuses (10, 110). Die Antriebsfunktion übernimmt ein Kolben (61, 161). Letzterer ist mit einem Schlitten (50) verbunden, vgl. Figur 3, der über ein Getriebe auf die Greifer (70, 170) wirkt.

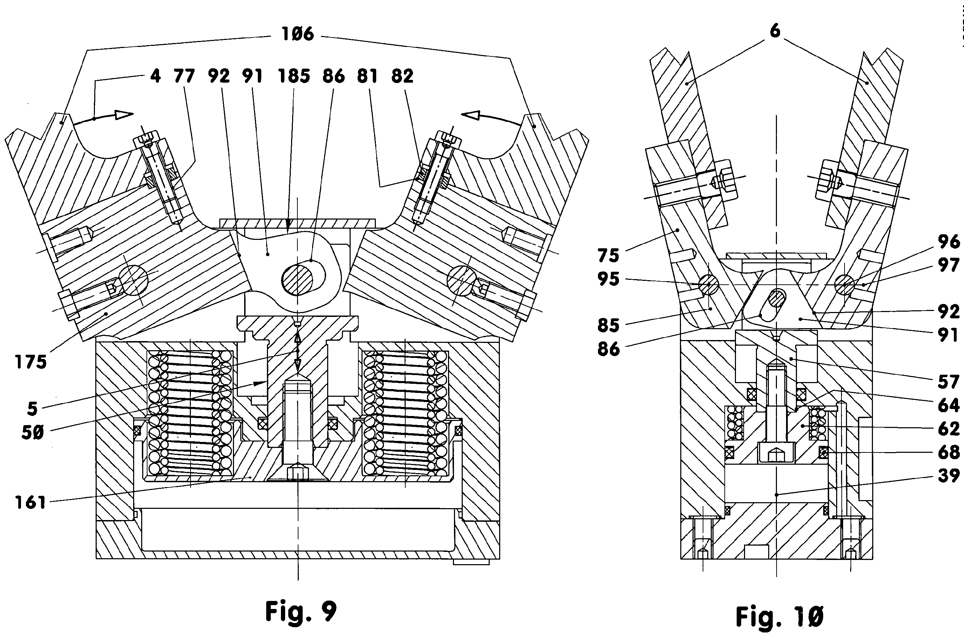

In den genannten Figuren befinden sich die Greifelementeträger (71, 72; 171, 172) in einer Geschlossenstellung. Zum Öffnen der an den Greifelementeträgern (71, 72; 171, 172) anzubringenden Greifelemente (6), vgl. Figur 9, werden sie - beispielsweise um 13 bzw. 21 Winkelgrade - um die Schwenkachsen (95, 96) nach außen geschwenkt, vgl. Figuren 9 und 10.

Die kleinere Greifvorrichtung (1) hat ein quaderförmiges Gehäuse (10), das beispielsweise aus einer Aluminiumlegierung, z.B.: AlMgSi1, hergestellt ist. Das Gehäuse (10), das hier aus einem Grundkörper (13) und einem Deckel (40) besteht und dessen Gesamtabmessungen beispielsweise 76,5mm * 48mm * 28mm betragen, hat nach Figur 3 eine zentrale gestufte Durchgangsbohrung (15) zur Aufnahme des Stellglieds (60) und des Schlittens (50). Die Durchgangsbohrung (15) ist in drei Abschnitte aufgeteilt. Der nach Figur 3 obere Abschnitt (16), vgl. auch Figur 5, ist die Führungsbohrung des Schlittens (50). Er hat z.B. einen Durchmesser von 20,5 mm bei einer Tiefe von ca. 31 mm. Zumindest die Wandung dieses Abschnittes (16) ist hartcoatiert. In den Ausführungsbeispielen ist allerdings das gesamte Gehäuse (10, 110) hartcoatiert.

Der untere Abschnitt (18), der Zylinder des Stellglieds (60) misst z.B. einen Durchmesser von 26 mm bei einer Tiefe von ca. 28 mm. In diesem als Zylinder wirkenden Abschnitt (18) wird der Kolben (61) geführt. Zwischen diesen Abschnitten (16, 18) liegt der Dichtabschnitt (17). Er weist z.B. mittig eine Nut für eine Kolbenstangendichtung (37) auf. Sein Durchmesser beträgt z.B. 10 mm. Im Dichtabschnitt (17) bewegt sich eine den Kolben (61) und den Schlitten (50) verbindende Kolbenstange (57). Letztere ist bei den hier gezeigten Varianten nur beispielhaft zugleich Teil des Schlittens (50).

Quer zum oberen Abschnitt (16) der Durchgangsbohrung (15) ist eine Lagernut (25) angeordnet. Die Lagernut (25) ist parallel zur Längsseite des Grundkörpers (13) orientiert, so dass sie in Figur 3 der Länge nach geschnitten ist. Die Lagernut (25), die die Greifelementeträger (71, 72; 171, 172) seitlich führt, hat z.B. einen rechteckigen Querschnitt, vgl. Figur 4, der eine Tiefe von 20,5 mm und eine Breite von 11 mm hat. Bei dieser geometrischen Auslegung liegt der Schlitten (50) mit z.B. 64% seines Umfangs an der Führungsbohrung (16) an.

Im oberen Bereich des Grundkörpers (13) befinden sich zwei feinbearbeitete Querbohrungen (28), die den Greifern (70, 170) als Teile der jeweiligen Schwenklagerung dienen. Die beiden Querbohrungen (28) sind von der Mittellinie (39) des Gehäuses (10) jeweils 17 mm entfernt. Der jeweilige Abstand gegenüber dem Grund der Lagernut (25) beträgt 14 mm.

Von der Unterseite sind in den Grundkörper (13) zwei Druckluftbohrungen (29, 31) eingearbeitet, die über dem Deckel (40) mit bodenseitigen Druckluftanschlüssen verbindbar sind. Zwischen dem oberen Ende der längeren Druckluftbohrung (29) und dem unteren Abschnitt (18) der Durchgangsbohrung (15) befindet sich eine vom Abschnitt (18) aus eingefräste sichelförmige Einkerbung (32), über die der kolbenstangenseitigen Zylinderseite Druckluft zugeführt werden kann. Über die kurze Druckluftbohrung (31) und eine diese schneidende Querbohrung (34) wird die Kolbenbodenseite zum Öffnen der Greifer (70) mit Druckluft versorgt. Zusätzlich befinden sich auf der Gehäuseschmalseite (11), vgl. Figur 3, zwei Gewindebohrungen (35). An die untere Gewindebohrung schließt sich die untere Querbohrung (34) an. Die obere Gewindebohrung ist über eine obere Querbohrung (33) mit dem Teil des Zylinderraums verbunden, in dem nach Figur 3 und 4 die Rückholfedern (48, 49) untergebracht sind.

Der Deckel (40) des Gehäuses (10) ist ein quaderförmiger Block, der im Bereich der Quaderkontur eine Höhe von 10 mm hat. In seiner Mitte ist zum Grundkörper (13) hin ein kurzer Dichtzapfen (41) angeformt, der mit geringem Spiel in den unteren Abschnitt (18) der gestuften Durchgangsbohrung (15) passt. Der Dichtzapfen (41) weist in halber Höhe eine Ringnut auf, in der ein Dichtring (47) zur Abdichtung des Abschnitts (18) gegenüber der Umgebung sitzt, vgl. Figuren 3 und 4. Der Deckel (40) ist mit vier - nicht dargestellten - Schrauben am Grundkörper (13) befestigt.

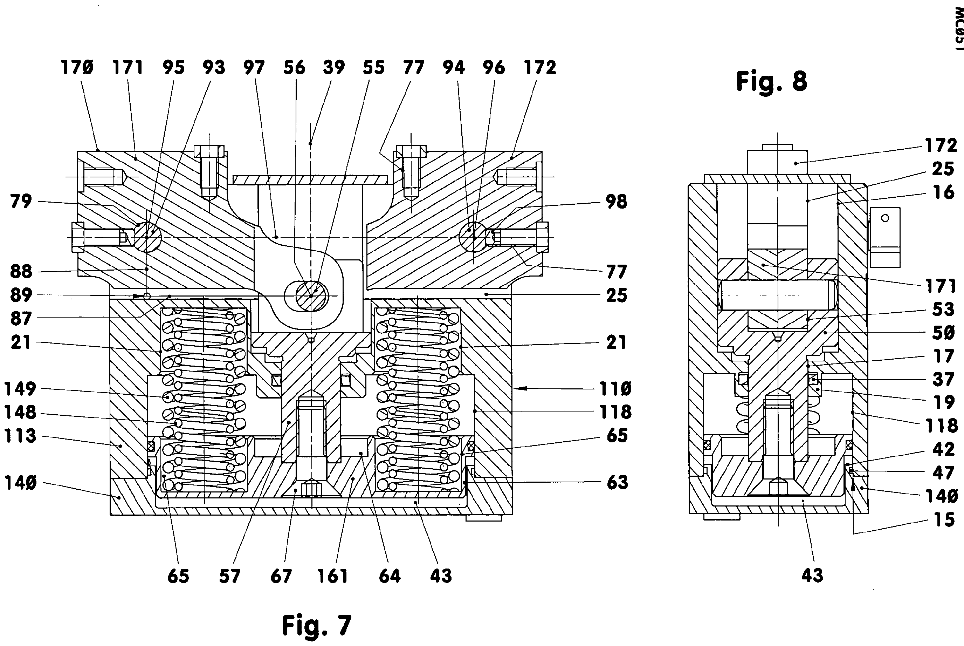

Das Gehäuse (110) der größeren Vorrichtung (101) hat einen vergleichbaren Aufbau. Es ist in den Figuren 7 bis 10 um 25% verkleinert dargestellt. Seine Gesamtabmessungen betragen beispielsweise 135 mm * 113 mm * 60 mm. Der obere Abschnitt (16) der Durchgangsbohrung (15), vgl. Figur 7, hat z.B. einen Durchmesser von 40,5 mm bei einer Tiefe von ca. 29 mm. Der Durchmesser des Dichtabschnitts (17) beträgt 20 mm. Der untere Abschnitt (18) der Durchgangsbohrung (15) hat den Querschnitt eines Langloches. Die Langlochradien messen 25 mm, während der kürzeste Abstand zwischen den Mittelpunkten der Langlochradien 60 mm beträgt. In den langlochartigen Abschnitt (118) ragt nach den Figuren 7 und 8 von oben her ein 7,65 mm hoher zentraler Steg (19) hinein, der u.a. den Dichtabschnitt (17) mit seiner Kolbenstangendichtung (37) aufnimmt.

Beidseits des Stegs (19) sind parallel zur Gehäusemittellinie (39) zwei Federlagerbohrungen (21) angeordnet. Sie sind von der Mittellinie (39) jeweils 36 mm entfernt und haben bei einem Durchmesser von 29 mm eine Tiefe von 22 mm.

Die Lagernut (25) ist bei einer Tiefe von 38 mm 20 mm breit. Bei der geometrischen Auslegung nach den Figuren 7 bis 10 liegt der Schlitten (50) mit ca. 67% seines Umfangs an der Führungsbohrung (16) an. Die Querbohrungen (28), die die Schwenkbolzen (93, 94) aufnehmen, haben als Mittellinien die Schwenkachsen (95, 96), die von der Mittellinie (39) 55 mm und vom Lagernutgrund 20,5 mm entfernt sind.

In der unteren Hälfte hat der Grundkörper (113) - im Bereich der zur Mittellinie (39) parallelen außenliegenden Eckkanten - pro Eckkante eine Eckaussparung (22), vgl. Figur 2. Jede Eckaussparung (22) ist auf der Grundkörperschmalseite (11) 15,5 mm breit, während sie auf der Grundkörperlängsseite 17,5 mm misst. Die Höhe der einzelnen Eckaussparung (22) misst z.B. 44 mm. Die beiden Seitenflächen der jeweiligen Eckaussparung (22) sind über eine Ausrundung miteinander verbunden, deren Radius z.B. 8 mm beträgt.

Der an der Unterseite des Grundkörpers (113) festgeschraubte Deckel (140) besteht aus einer im Wesentlichen rechteckigen, z.B. 12,5 mm hohen Platte, die zum Grundkörper (113) hin zusätzlich eine ovale, z.B. 4 mm hohe Dichterhebung (42) aufweist. Die Dichterhebung (42) ragt in den unteren Abschnitt (18) der Durchgangsausnehmung (15) des Grundkörpers (113) hinein. Sie hat ebenfalls auf halber Höhe eine umlaufende Nut, in der ein Dichtring (47) eingelegt ist. In die Dichterhebung (42) ist eine langlochartige, z.B. 14 mm tiefe, 104,8 mm lange und 44,8 mm breite Ausnehmung (43) eingearbeitet. In sie taucht der Kolben (161) der Greifvorrichtung (101) bei der Geschlossenstellung der Greifer (170) ein.

Der Deckel (140) weist z.B. acht Bohrungen auf, die z.B. jeweils einen Durchmesser von 6,4 mm haben. Über die vier einander nächstgelegenen Bohrungen ist der Deckel (140) mit dem Grundkörper (113) verschraubt. Die anderen Bohrungen (45) liegen vor dem Bereich des Gehäuses (110), in dem die Eckaussparungen (22) liegen, vgl. Figur 2. Dadurch kann das Gehäuse (110) beispielsweise auf Stehbolzen montiert werden.

Selbstverständlich kann anstelle der Gehäuse (10, 110) auch jeweils ein entsprechendes Gestell verwendet werden. Das Gestell, das wie das Gehäuse (10, 110) das Stellglied (60) und die Greifer (70, 170) lagert und führt, hat eine erheblich geringere Masse. Da es im Gegensatz zum Gehäuse (10, 110) einen Staub- oder Spritzschutz nicht gewährleistet, wird es beispielsweise in räumlich geschlossenen Geräten oder Maschinen verwendet.

Im Gehäuse (10) der kleineren Greifvorrichtung (1) ist der Schlitten (50) und das Stellglied (60) in Form eines Kolbens (61) in Richtung der Mittellinie (39) um z.B. 9,75 mm längsverschiebbar gelagert. Der Schlitten (50), vgl. Figuren 3, 4 und 6, ist im Wesentlichen ein aus einem Einsatzstahl, z.B. 16 MnCr5, gefertigtes Drehteil, das aus einem Führungsabschnitt (51) und einer Kolbenstange (57) besteht. Der zylindrische Führungsabschnitt (51) hat einen Durchmesser von 20,5 mm und eine Höhe von 20,5 mm. Er weist eine feinbearbeitete Führungsfläche (52) auf, vgl. Figur 6, mit der er im Grundkörper (13) geführt ist. Zumindest die Führungsfläche (52) ist gasnitriert und geschliffen.

In den Führungsabschnitt (51) ist eine quer zur Mittellinie (39) ausgerichtete zentrale Gabelnut (53) eingearbeitet. Die Gabelnut (53) hat nach Figur 4 einen rechteckigen Querschnitt, der beispielsweise 11 mm breit und 16,8 mm tief ist. Quer und mittig zur Gabelnut (53) ist eine durchgehende Querbohrung (54) zur Lagerung des Zapfens (55) angeordnet. Die Mittellinie (56) der Querbohrung (54) liegt z.B. 7,8 mm über dem Gabelnutgrund. Der Zapfen (55) sitzt in der Querbohrung (54) mittels eines Presssitzes.

Die ungeformte, zylindrische Kolbenstange (57) hat einen Durchmesser von 10 mm bei einer Länge von 16,7 mm. Sie weist z.B. eine zentrale M5-Gewindebohrung auf.

An dem Schlitten (50) ist der zylindrische Kolben (61) starr befestigt. Am Kolben (61), vgl. Figur 10, der in einer üblichen Ringnut eine Kolbendichtung (68) aufnimmt, ist eine z.B. 8,5 mm langer Federführungszapfen (62) angeformt. Letzterer hat einen Durchmesser von 16,5 mm und weist an seiner Stirnseite eine Ausdrehung (64) als Zentrierung auf. Die Stirnfläche des Federführungszapfens (62) dient auch als Anschlag in der Greiferoffenstellung.

Zwischen der kolbenstangenseitigen Kolbenstirnfläche und dem planen Boden des unteren Abschnitts (18) der Durchgangsbohrung (15) sind z.B. zwei Schraubendruckfedern (48, 49) angeordnet. Hierbei sitzt eine kleinere Schraubendruckfeder (48) in einer größeren (49). Beide haben entgegengesetzte Windungsrichtungen und z.B. eine unterschiedliche Drahtstärke. Die Summe ihrer Federraten ist so gewählt, dass das ausschließlich federkraftbedingte Haltemoment der Greifer (70) z.B. 8 Nm beträgt. Bei einer zusätzlichen Pneumatikdruckbeaufschlagung des Kolbens (61) in Wirkrichtung der Schraubendruckfedern (48, 49) erhöht sich das Haltemoment auf ca. 20 Nm.

Die Kombination aus Schlitten (50) und Kolben (161) ist in ähnlicher Ausgestaltung auch bei der größeren Greifvorrichtung (101) zu finden, vgl. Figuren 7 bis 9. Der Schlitten (50) hat hier einen Durchmesser von 40,5 mm bei einer Länge der Führungsfläche (52) von 29 mm. Die Gabelnut (53) ist bei einer Tiefe von 38 mm 20 mm breit. Die Querbohrung (54) befindet sich hier 20,5 mm oberhalb des Gabelnutgrundes. Die Kolbenstange (57) hat einen Durchmesser von 20 mm und eine Länge von 35,5 mm.

Der im Wesentlichen ovale Kolben (161) weist eine der Kolbenstangenseite abgewandte, 13,5 mm tiefe, sich in Richtung der Mittellinie (39) ausdehnende Verbreiterung (63) auf. Die Verbreiterung (63) hat senkrecht zur Mittellinie (39) einen ovalen Querschnitt, dessen Länge 104 mm bei einer Breite von 44 mm misst. Der Kolben (161) hat eine zentrale Durchgangsbohrung zum Durchstecken der Befestigungsschraube (67). Um die Durchgangsbohrung herum ist eine 7 mm tiefe Einsenkung (64) ausgearbeitet. Beidseits der Einsenkung (64) befinden sich zwei zylindrische Ausnehmungen (65) zur Aufnahme von z.B. vier Schraubendruckfedern (148, 149). Die Ausnehmungen (65) sind bei einem Durchmesser von 29 mm 18,5 mm tief. Durch die gehäuseseitigen Federlagerbohrungen (21) und die kolbenseitigen Ausnehmungen (65) ergibt sich im Gehäuse (110) ein z.B. 61 mm langer Federraum, in dem in der Greifergeschlossenstellung nach Figur 7 die Schraubendruckfedern (148, 149) vorgespannt sitzen. Der Hub des Kolbens (161) beträgt hier 23,1 mm.

Anstelle der Schraubendruckfedern können auch andere Federbauarten, wie z.B. Tellerfedern, verwendet werden.

Bei dieser Greifvorrichtung (101) ergibt sich ein federkraftbedingtes Haltemoment von 50 Nm. Wird zusätzlich der Kolben (61, 161) kolbenstangenseitig mit 6*10⁵ Pa Druck beaufschlagt, steigt das Haltemoment auf 180 Nm an.

Nach den Figuren 3 und 10 weist die kleinere Greifvorrichtung (1) z.B. winkelförmige Greifelementeträger (71, 72) auf.

Beide Greifelementeträger (71, 72) sind nach den Figuren 3 und 4 baugleich ausgeführt. Sie haben seitliche Außenflächen (73, 74), mit denen sie zwischen den seitlichen Nutwandungen (26, 27) der Lagernut (25) geführt sind. Die Gesamtsumme des Spiels zwischen den Nutwandungen (26, 27) und den Außenflächen (73, 74) kann weniger als 0,02 mm betragen.

Jeder Greifelementeträger (71, 72) hat einen gehäuseinternen (85) und einen gehäuseexternen Arm (75), die hier einen Winkel von 102,5 Winkelgraden einschließen, vgl. Figur 10. Der gehäuseexterne, nach Figur 3 nach oben ragende, parallel zur Mittellinie (39) orientierte Arm (75) hat im Wesentlichen einen quadratischen Querschnitt. Er weist in seiner oberen Hälfte eine zu seiner Längsausdehnung quer angeordnete Befestigungsbohrung (77) auf, über die ein - an das jeweilige Werkstück angepasstes - Greifelement (6) befestigt werden kann. Nach Figur 1 hat jeder nach oben ragende Arm (75) an seiner Außenseite zwei z.B. 3,5 mm breite 45°-Fasen (76).

Der gehäuseinterne Arm (85) weist an seinem freien Ende eine Führungskulisse (86) in Form einer Nut mit halbzylindrischem Nutgrund und zwei einander gegenüberliegenden flächigen Flanken auf. Die beispielsweise gerade, 4 mm breite Führungskulisse (86) hat eine Spurgerade (87), die die Schwenkachse (96) in kürzestem Abstand - entlang dem Abstandslot (88) - von z.B. 12,9 mm passiert. Die Spurgerade (87) schließt hierbei nach Figur 3 mit der Mittellinie (39) z.B. einen Winkel von 17,5 Winkelgraden ein. Der sich relativ zu der Führungskulisse (86) bewegende Querschnitt des Zapfens (55) hat seine hintere Kulissenposition erreicht, wenn der Abstand zwischen der Zapfenmittellinie (56) und dem Schnittpunkt (89), der durch den Schnitt des Abstandslots (88) mit der Spurgeraden (87) entsteht, 10,9 mm beträgt. Der vordere Mittelpunkt des Zapfens (55) ist von dem hintersten Punkt 7,5 mm entfernt.

Nach Figur 10 kann die Führungskulisse (86) auch vorn geschlossen sein, so dass sie die Form eines Langloches aufweist.

Gemäß der Figuren 3 und 4 ist der vordere Bereich des freien Endes des Arms (85) verjüngt ausgeführt. Die Breite der Verjüngung entspricht 50% der Breite des restlichen Arms (85). Die verjüngende Ausfräsung (91), in deren Bereich sich die beiden Greifelementeträger (71, 72) im montierten Zustand bereichsweise überlappen, hat z.B. eine maximale Tiefe von 15,6 mm. Nach Figur 3 ist ihre Fräskante (92) um 42,5 Winkelgrade gegenüber der Mittellinie (39) geneigt.

In der bevorzugten Geschlossenstellung nach Figur 3 beträgt der Abstand der Mittellinie (39) des Zapfens (55) von der Ebene (97), in der die Schwenkachsen (95, 96) liegen, 11 mm. Dieser Abstand verkürzt sich in der Offenstellung der Greifer (70) auf 3,55 mm, vgl. Figur 10.

In den Bohrungen (79) der Greifelementeträger (71, 72) sind die diese schwenkbar im Gehäuse (10) lagernden Schwenkbolzen (93, 94) z.B. jeweils mittels Querpresssitz fixiert.

Die Greifelementeträger (171, 172) der großen Greifvorrichtung (101) haben einen nahezu quaderförmigen Schwenkkörper (175), an den jeweils ein in Richtung Gehäusemitte abstehender, z.B. 39 mm langer Kragarm (185) angeformt ist. In dem Kragarm (185) ist als Führungskulisse ein Langloch (86) angeordnet. Das Langloch (86) ist z.B. bei einer Breite von 10 mm 15 mm lang. Es ist nach Figur 7 quer zur Mittellinie (39) orientiert. In dieser Figur befinden sich die Greifelementeträger (171, 172) in einer idealen Geschlossenstellung, bei der die Unterseiten der Greifelementeträger (171, 172) parallel zum Nutgrund der Lagernut (25) bzw. senkrecht zur Mittellinie (39) ausgerichtet sind.

Die Spurgerade (87) der Führungskulisse hat von der Schwenkachse (95) den kürzesten Abstand von 19,6 mm. Dieses Abstandslot (88) schneidet die Spurgerade (87) in einem Punkt (89), der von der Mittellinie (39) z.B. 55 mm beabstandet ist. Der der Schwenkachse (95) nächstgelegene Radiusmittelpunkt des Langloches (86) liegt vom Schnittpunkt (89) 51 mm, der weiterab gelegene Radiusmittelpunkt 56 mm entfernt.

Auch diese Greifelementeträger (171, 172) haben verjüngende Ausfräsungen (91), die den Kragarm (185) im Bereich der Führungskulisse (86) auf die halbe Bauteilstärke reduzieren, vgl. Figur 8. Die zur Ausfräsung (91) gehörende Fräskante (92) ist nach Figur 7 parallel zur Mittellinie (39) orientiert und von dieser 19 mm entfernt.

In der bevorzugten Geschlossenstellung nach Figur 7 beträgt der Abstand der Mittellinie (56) des Zapfens (55) von der Ebene (97), in der die Schwenkachsen (95, 96) liegen, 11 mm. Dieser Abstand verkürzt sich in der Offenstellung der Greifer (170) auf nahezu Null, vgl. Figur 9.

Die Schwenkbolzen (93, 94), mit deren Hilfe die Greifelementeträger (171, 172) im Gehäuse (110) gelagert sind, sind formschlüssig mittels Gewindestifte (98) in den Bohrungen (79) festgeklemmt. Die Gewindebohrung (77), in denen die Gewindestifte (68) sitzen, können zugleich zur Befestigung eines Greifelements (106) benutzt werden. Oberhalb der Gewindebohrung (77) befindet sich zudem eine weitere Gewindebohrung. Auch auf der Oberseite des Greifelementeträgers (171, 172) ist eine Gewindebohrung (77) angeordnet. Nach Figur 9 ist dort ein Greifelement (106) befestigt. Jede Befestigungsbohrung (77) hat im Bereich ihrer Öffnung eine Einsenkung (81), deren Durchmesser mehrere Millimeter größer ist als die entsprechende Gewindebohrung (77) selbst. In dieser Einsenkung (81) kann eine kurze Zentrierhülse (82) eingeklemmt werden, um für die Greifelemente (106) einen Zentriersitz zu schaffen.

Nach Figur 2 stehen die Schwenkbolzen (93, 94) nach vorn über das Gehäuse (110) über. Auf den freien Enden der Schwenkbolzen (93, 94) sind Klemmblöcke (8) festgeklemmt. Diese Klemmblöcke (8) weisen Nasen (9) auf, die bei der Annäherung an am Gehäuse (110) befestigten Näherungsschaltern entsprechende Positionssignale auslösen. Die Näherungsschalter sind in Figur 2 nicht dargestellt.

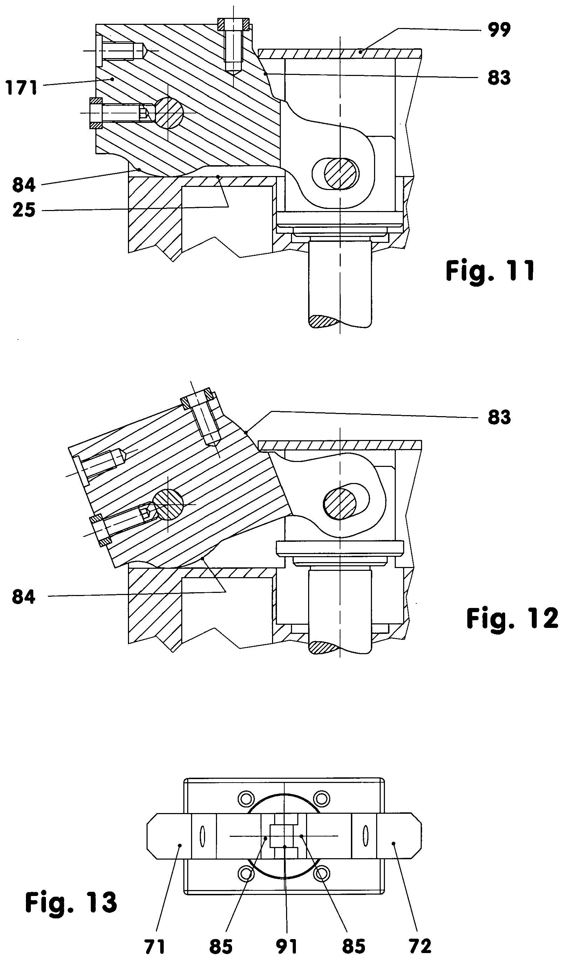

In Figur 13 ist eine Greifvorrichtung (1) in Offenstellung in der Draufsicht dargestellt. Die hier gezeigten Greifelementeträger (71, 72) haben jedoch andere gehäuseinterne Arme (85) als die Greifvorrichtung nach den Figuren 3 bis 6. Hier ist der linke interne Arm im Bereich der Führungskulisse gabelförmig ausgeführt. In die zwischen dem geteilten Arm vorhandene Aussparung greift der rechte interne Arm hinein. Er hat dazu beidseitig eine Ausfräsung (91), die jeweils z.B. einem Viertel der Breite der Gabelnut (53) entspricht. Bei dieser Variante entsteht auch bei größten Greifkräften kein um die Mittellinie (39) wirkendes Moment.

Zwischen den Greifelementeträgern (71, 72; 171, 172) befindet sich auf der Oberseite (14) des Grundkörpers (13, 113) jeweils mittig eine rechteckige Abdeckplatte (99), vgl. Figuren 1 und 2. Letztere soll verhindern, dass größere Verunreinigungen, z.B. in Form von Zerspanungsabfällen in das Gehäuse (10, 110) gelangen.

Nach den Figuren 11 und 12 sind die Greifelementeträger (171) im dargestellten Schnitt mit jeweils zwei Radiusbögen (83, 84) ausgestattet. Der obere Radiusbogen (83) ist so groß gewählt, dass er die nächstgelegene Kante der Abdeckplatte (99) gerade noch nicht berührt. Das Spiel beträgt z.B. 0,05 mm. Der untere Radiusbogen (84) ist dem Grund der Lagernut (25) zugewandt. Auch hier beträgt der Abstand zwischen dem Radiusbogen (84) und dem Lagernutgrund weniger als 0,05 mm. Um die Abdichtwirkung zusätzlich zu vergrößern, können am Nutgrund und an der Abdeckplatte (99) entsprechende Abstreifer angeordnet werden.

Beim Zusammenbau der Greifvorrichtungen (1, 101) wird die Führungsbohrung (16) des Gehäuses (10, 110) und neben dem Zapfen (55) zumindest auch die seitlichen Nutwandungen der Gabelnut (53) zusätzlich mit einem Schmiermittel, z.B. dem Dauerschmiermittel Molybdändisulfid (MoS2), bestrichen.

Um die Getriebereibung zusätzlich zu verringern, können die Schwenkbolzen (93, 94) in ihren gehäuseseitigen Bohrungen in Wälzlagern gelagert werden. Es ist auch denkbar, auf den Zapfen (55) Wälzlager oder Rollen anzuordnen, die durch die kulissenartigen Langlöcher (86) der Greifelementeträger (71, 72; 171, 172) umgriffen werden.

Zum Öffnen der Greifelemente (6, 106) wird der Abschnitt (18, 118) der Durchgangsbohrung (15) mit Druckluft beaufschlagt. Hierdurch bewegt sich die Kombination aus dem Kolben (61, 161) und dem Schlitten (50) nach den Figuren 8 und 10 nach oben. Diese Hubbewegung ist beendet, wenn bei der Greifvorrichtung (1) die Stirnfläche des Federführungszapfens (62) an der Grundfläche des Abschnittes (18) zur Anlage kommt. Bei der Greifvorrichtung (101) legt sich der plane Grund der Ausdrehung (64) an der Stirnfläche des zentralen Steges (19) an.

Während der Hubbewegung verschwenkt der Schlitten (50) über den Zapfen (55), der in die jeweilige Führungskulissen (86) der Greifelementeträger (71, 72; 171, 172) eingreift, die Greifer (70, 170). Da beide Greifelementeträger (71, 72; 171, 172) den Zapfen (55) umgreifen, erfolgt die Schwenkbewegung der Greifer (70, 170) eines jeden Greiferpaares synchron um die Schwenkachsen (95, 96), sofern die Greifelementeträger (71, 72; 171, 172) pro Vorrichtung formgleiche Führungskulissen (86) aufweisen. Die Greifelementeträger einer Greifvorrichtung bewegen sich hierbei entgegengesetzt.

Die jeweilige Greifbewegung erfolgt in der entgegengesetzten Schwenkrichtung (4), vgl. Figur 9, aufgrund der vorgespannten Rückholfedern. Die Greifbewegung kann zusätzlich mit Druckluft unterstützt werden. Selbstverständlich ist es auch möglich, auf die Rückholfedern (48, 49; 148, 149) zu verzichten oder sie in dem Zylinderraumbereich anzuordnen, der nach den Figuren 8 und 10 unterhalb des Kolbens (61, 161) liegt. Im letztgenannten Fall öffnet die Greifvorrichtung (1, 101) mittels Federkraft.

### Bezugszeichenliste:

- 1, 101: Greifvorrichtung klein, groß
- 3: Druckluftanschlüsse
- 4: Greifrichtung
- 5: Führungslängsrichtung, Schlittenbewegung
- 6, 106: Greifelemente, nur teilweise dargestellt
- 8: Klemmblöcke
- 9: Nasen

- 10, 110: Gehäuse
- 11: Gehäuseschmalseite
- 13, 113: Grundkörper
- 14: Oberseite
- 15: Durchgangsbohrung, Durchgangsausnehmung
- 16: oberer Abschnitt, Führungsbohrung
- 17: mittlerer Abschnitt, Dichtabschnitt
- 18, 118: unterer Abschnitt, Zylinderbohrung, Ausnehmung
- 19: Steg, zentral
- 21: Federlagerbohrungen
- 22: Eckaussparungen

- 25: Lagernut
- 26, 27: Nutwandungen, seitlich
- 28: Querbohrungen
- 29, 31: Druckluftbohrungen, lang, kurz, längs
- 32: Einkerbung
- 33, 34: Querbohrungen, oben, unten
- 35: Gewindebohrungen
- 36: Befestigungsbohrungen
- 37: Kolbenstangendichtung
- 39: Gehäusemittellinie, Schlittenmittellinie
- 40, 140: Deckel
- 41: Dichtzapfen
- 42: Dichterhebung
- 43: Ausnehmung, langlochartig
- 44: Gewindebohrungen
- 45: Befestigungsbohrungen
- 47: Dichtring
- 48, 148: Rückholfedern, innen, Schraubendruckfedern
- 49, 149: Rückholfedern, außen, Schraubendruckfedern

- 50: Schlitten, Führungsschlitten
- 51: Führungsabschnitt
- 52: Führungsfläche, zylindrisch, Außenwandung
- 53: Gabelnut
- 54: Querbohrung
- 55: Zapfen
- 56: Mittellinie

- 57: Kolbenstange
- 58: Gewindebohrung
- 59: Zentralschraube

- 60: Stellglied, Zylinder-Kolben-Einheit
- 61, 161: Kolben
- 62: Federführungszapfen, Anschlagzapfen
- 63: Verbreiterung
- 64: Einsenkung, Ausdrehung
- 65: Ausnehmung, zylindrisch
- 67: Befestigungsschraube
- 68: Kolbendichtung

- 70, 170: Greifer
- 71, 171: Greifelementeträger
- 72, 172: Greifelementeträger
- 73, 74: Außenflächen
- 75, 175: Arm, gehäuseextern, Schwenkkörper
- 76: Fase
- 77: Gewindebohrung, Befestigungsbohrung
- 79: Bohrungen für (95) und (96)
- 81: Einsenkung
- 82: Zentrierhülse
- 83: Radiusbogen, Mitte
- 84: Radiusbogen, unten

- 85, 185: Arm, gehäuseintern, Kragarm
- 86: Führungskulisse, nutförmig, langlochförmig
- 87: Spurgerade
- 88: Abstandslot
- 89: Schnittpunkt
- 91: Ausfräsung, Verjüngung
- 92: Fräskante

- 93, 94: Schwenkbolzen
- 95, 96: Schwenkachsen
- 97: Schwenkachsenebene
- 98: Gewindestift

- 99: Abdeckplatte

## Patentansprüche

1. Greifvorrichtung mit mindestens zwei in einem Gehäuse (10) schwenkbar gelagerten, - jeweils aus einem Greifelementeträger (71, 72; 171, 172) und/oder mindestens einem Greifelement (6, 106) bestehenden, - Greifer (70, 170)
- wobei jeder Greifer (70, 170) im Gehäuse (10, 110) schwenkbar gelagert ist,
- wobei das gehäuseseitige Ende des jeweiligen Greifers (70, 170) eine Führungskulisse (86) aufweist,
- wobei jede Führungskulisse (86) je einen Zapfen (55) oder einen Bereich eines Zapfens (55) zumindest bereichsweise umfasst,
- wobei der oder die Zapfen (55) in einem im Gehäuse (10, 110) quer zu den Schwenkachsen (95, 96) der Greifer (70, 170) geführten Schlitten (50) gelagert sind, der mit einem Stellglied (60) in Wirkverbindung steht,
- wobei der Schlitten (50) zumindest bereichsweise eine zylindrische Außenwandung (52) aufweist, mit der er in einer Führungsbohrung (16) des Gehäuses (10, 110) geführt ist,
- wobei die Führungsbohrung (16) einen Durchmesser hat, der mindestens 60% der Breite des Gehäuses (10) beträgt,
- wobei der Schlitten (50) die gehäuseseitigen Enden des jeweiligen Greifers (70, 170) umgreift,
- wobei das Stellglied (60) eine Zylinder-Kolben-Einheit ist, deren Kolben (61, 161) oder deren Zylinder mit dem Schlitten (50) fest verbunden ist, und
- wobei der Kolben (61, 161) der Zylinder-Kolben-Einheit einen unrunden Querschnitt aufweist.

2. Greifvorrichtung gemäß Anspruch 1, **dadurch gekennzeichnet, dass** der Schlitten (50) eine zentrale Gabelnut (53) aufweist.

3. Greifvorrichtung gemäß Anspruch 1, **dadurch gekennzeichnet, dass** das Gehäuse (10, 110) im Bereich der Lagerung der Greifer (70, 170) eine zentrale Lagernut (25) aufweist.

4. Greifvorrichtung nach mindestens einem der vorangegangenen Ansprüche, **dadurch gekennzeichnet, dass** die Gabelnut (53) und die Lagernut (25) jeweils eine Breite haben, die maximal um 10% differiert.

5. Greifvorrichtung nach mindestens einem der vorangegangenen Ansprüche, **dadurch gekennzeichnet, dass** der Durchmesser der Führungsbohrung (16) auf die Breite der Lagernut (25) so abgestimmt ist, dass der Schlitten (50) mit mindestens 60% seines Umfangs an der Führungsbohrung (16) anliegt.

6. Greifvorrichtung gemäß Anspruch 1, **dadurch gekennzeichnet, dass** das Stellglied (60) in mindestens eine Richtung mit Fremdenergie antreibbar ist.

7. Greifvorrichtung gemäß Anspruch 1, **dadurch gekennzeichnet, dass** das Stellglied (60) am Schlitten (50) angeformt oder mit diesem starr verbunden ist.

## Claims

1. Gripping device with at least two grippers (70, 170) mounted pivotably in a housing (10), each consisting of a gripping element carrier (71, 72; 171, 172) and/or at least one gripping element (6, 106),
- wherein each gripper (70, 170) is mounted pivotably in the housing (10, 110),
- wherein the housing-side end of the respective gripper (70, 170) has a slotted guide (86),
- wherein each slotted guide (86) at least partially encloses a journal (55) or a region of a journal (55) in each case,
- wherein the one or more journal (s) (55) is/are mounted in a slide (50) which is supported in the housing (10, 110) transversely to the pivot axes (95, 96) of the grippers (70, 170) and is in operative connection with an actuator (60),
- wherein at least a region of the slide (50) has a cylindrical outer wall (52), with which it is guided in a guide bore (16) of the housing (10, 110),
- wherein the guide bore (16) has a diameter whose size is equal to at least 60% of the width of the housing (10),
- wherein the slide (50) clasps the housing-side end of the respective gripper (70, 170),
- wherein the actuator (60) is a cylinder-piston unit, of which the piston (61, 161) or the cylinder is fixedly connected to the slide (50), and
- wherein the piston (61, 161) of the cylinder-piston unit has an unround cross-section.

2. Gripping device according to Claim 1, **characterized in that** the slide (50) has a central fork groove (53).

3. Gripping device according to Claim 1, **characterized in that** the housing (10, 110) has a central bearing groove (25) in the region of the bearing for the grippers (70, 170) .

4. Gripping device according to any one of the preceding claims, **characterized in that** the respective widths of the fork groove (53) and the bearing groove (25) differ by not more than 10%.

5. Gripping device according to any one of the preceding claims, **characterized in that** the diameter of the guide bore (16) is matched with the width of the bearing groove (25) in such manner that at least 60% of the circumference of the slide (50) bears on the guide bore (16) .

6. Gripping device according to Claim 1, **characterized in that** the actuator (60) can be driven in at least one direction by external energy.

7. Gripping device according to Claim 1, **characterized in that** the actuator (60) is conformed on the slide (50) or is rigidly connected thereto.

## Revendications

1. Dispositif de préhension, pourvu d'au moins deux grappins (70, 170) logés de manière pivotante dans un carter (10), constitués d'un support d'élément de préhension (71, 72 ; 171, 172) et / ou d'au moins un élément de préhension (6, 106),
- chaque grappin (70, 170) étant logé de manière pivotante dans le carter (10, 110),
- l'extrémité côté carter du grappin (70, 170) concerné comportant une coulisse de guidage (86),
- chaque coulisse de guidage (86) comprenant au moins par endroits chacune un tenon (55) ou une zone d'un tenon (55),
- le ou les tenons (55) étant logé(s) dans un chariot (50) guidé dans le carter (10, 110), à la transversale des axes de pivotement (95, 96) des grappins (70, 170), qui est en liaison fonctionnelle avec un actionneur (60),
- le chariot (50) comportant au moins par endroits une paroi extérieure (52) cylindrique, par laquelle il est guidé dans un alésage de guidage (16) du carter (10, 110),
- l'alésage de guidage (16) ayant un diamètre qui s'élève à au moins 60 % de la largeur du carter (10),
- le chariot (50) entourant les extrémités côté carter du grappin (70, 170) concerné,
- l'actionneur (60) étant une unité piston/cylindre, dont le piston (61, 161) ou dont le cylindre est fixement assemblé avec le chariot (50) et
- le piston (61, 161) de l'unité piston/cylindre présentant une section transversale non circulaire.

2. Dispositif de préhension selon la revendication 1, **caractérisé en ce que** le chariot (50) comporte une rainure fourchue (53) centrale.

3. Dispositif de préhension selon la revendication 1, **caractérisé en ce que** le carter (10, 110) comporte dans la zone de logement du grappin (70, 170) une gorge (25) centrale.

4. Dispositif de préhension selon au moins l'une quelconque des revendications précédentes, **caractérisé en ce que** la rainure fourchue (53) et la gorge (25) ont chacune une largeur qui diffère d'un maximum de 10 %.

5. Dispositif de préhension selon au moins l'une quelconque des revendications précédentes, **caractérisé en ce que** le diamètre de l'alésage de guidage (16) est adapté à la largeur de la gorge (25), de telle sorte que le chariot (50) soit adjacent par au moins 60 % de sa périphérie à l'alésage de guidage (16).

6. Dispositif de préhension selon la revendication 1, **caractérisé en ce que** l'actionneur (60) est susceptible d'être entraîné dans au moins une direction par de l'énergie extérieure.

7. Dispositif de préhension selon la revendication 1, **caractérisé en ce que** l'actionneur (60) est surmoulé sur le chariot (50) ou assemblé de manière rigide avec celui-ci.
